# FASCICULE DE BREVET EUROPEEN

(11) **EP 4 127 409 B1**
(45) Date de publication et mention de la délivrance du brevet: **23.04.2025**
(21) Numéro de dépôt: 21732359.1
(22) Date de dépôt: 24.03.2021
(51) Int. Cl.: F01D 5/14, F01D 5/28, F01D 21/04, F04D 29/32, F01D 5/20

(54) **AUBE DE SOUFFLANTE ROTATIVE DE TURBOMACHINE, SOUFFLANTE ET TURBOMACHINE MUNIES DE CELLE-CI**
TURBOMASCHINEN-BLÄSERLAUFSCHAUFEL, BLÄSER UND TURBOMASCHINE MIT EINER SOLCHEN SCHAUFEL
TURBOMACHINE FAN BLADE, FAN AND TURBOMACHINE WITH SUCH BLADE

(30) Priorité: 26.03.2020 FR 2002990
(43) Date de publication de la demande: 08.02.2023
(73) Titulaire: SAFRAN AIRCRAFT ENGINES, 75015 Paris (FR)
(72) Inventeur: GONDRE, Guillaume Pascal Jean-Charles, 77550 MOISSY-CRAMAYEL (FR); DE GAILLARD, Thomas Alain, 77550 MOISSY-CRAMAYEL (FR); FAIVRE D'ARCIER, Pierre Jean, 77550 MOISSY-CRAMAYEL (FR)
(74) Mandataire: Regimbeau
(86) Numéro de dépôt international: PCT/FR2021/050500
(87) Numéro de publication internationale: WO 2021/191559

(56) Documents cités:
- EP-A1- 1 908 919
- EP-A2- 1 382 799
- EP-A2- 2 514 922
- US-A1- 2008 159 868
- US-A1- 2009 129 934
- US-A1- 2019 242 260

## Description

L'invention concerne une aube de soufflante rotative de turbomachine, une soufflante rotative de turbomachine munie de celle-ci et une turbomachine munie de celle-ci.

Le domaine de l'invention concerne les turbomachines d'aéronefs, notamment les turboréacteurs ou les turbopropulseurs.

Le document US 2008/159868 concerne une aube de turbomachine ayant une partie fusible en tête d'aube.

Le document US 2019/242260 concerne une aube comportant une zone frangible sur sa partie supérieure.

Le document EP 1 908 919 concerne une aube de turbomachine ayant une cavité creuse débouchant au niveau du sommet de l'aube.

Il est connu que les aubes de soufflante rotative de turbomachine tournent dans un carter fixe les entourant avec un jeu entre les aubes et le carter, lequel est recouvert intérieurement d'un matériau abradable pouvant être raboté par les têtes d'aube en rotation. Le document EP-A-1 312 762 décrit de telles aubes, dont les sommets sont susceptibles d'être désintégrés par la paroi interne du carter de rétention en cas de choc suite à l'apparition d'un balourd ayant entraîné le découplage du palier, afin d'obtenir un jeu plus grand nécessaire au fonctionnement du découpleur. Selon ce document, chaque aube présente près de son sommet une zone fragilisée réalisée au moyen d'une rainure ménagée, parallèlement à son sommet, sur la face extrados. Cette rainure est remplie d'une résine qui assure la continuité aérodynamique de l'extrados au voisinage du sommet. La rainure est ménagée dans le matériau de base de l'aube sur une profondeur telle que la paroi restante en matériau de base de la zone fragilisée côtés bord d'attaque, intrados et bord de fuite a une résistance suffisante pour permettre le rabotage de la couche de matériau abradable et soit suffisamment fragile pour casser à l'apparition d'un choc entre le sommet de l'aube et la paroi intérieure du carter de rétention.

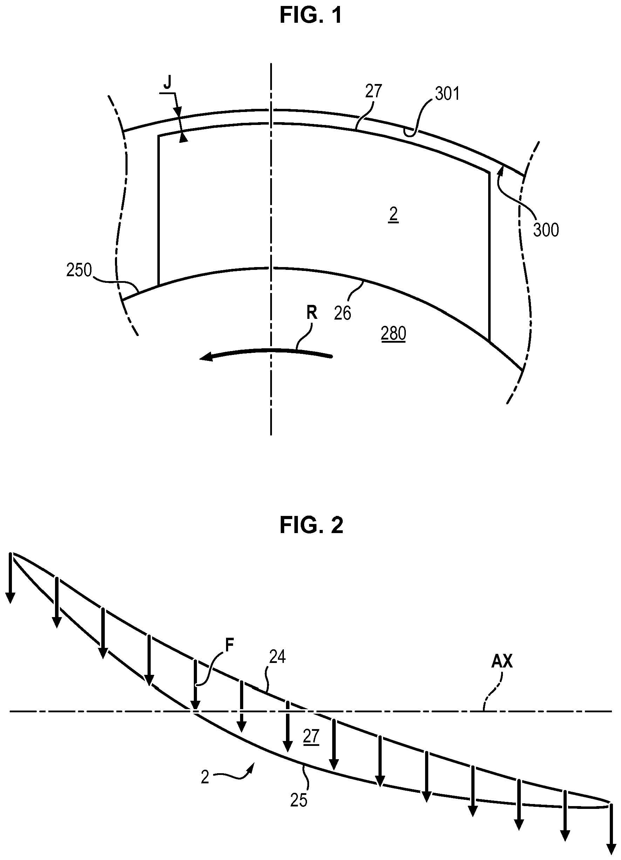

Le mouvement de rotation R du moteur faisant tourner l'aube 2 avec l'association de divers éléments externes comme par exemple l'ingestion d'oiseaux, ou des phénomènes vibratoires, peut induire des contacts soudains et importants entre la tête 27 d'aube et l'abradable 301 situé sur le carter 300 de la soufflante, ainsi que représenté à la figure 1.

Ce contact entre l'aube et le carter peut être à l'origine d'importants dégâts. En effet, un contact ponctuel et soudain peut conduire à déformer l'aube, ce qui va augmenter le contact en termes de surface de l'aube ou de profondeur de contact dans l'abradable. Si le phénomène n'est pas contrôlé, cela peut avoir pour conséquence d'endommager l'aube jusqu'à des pertes de matières importantes.

Pour éviter ce cas de figure, le jeu radial J en tête de la soufflante 280 et le volume de l'aube 2 sont dimensionnés de manière à éviter l'engagement de celle-ci dans l'abradable jusqu'à l'endommagement du moteur.

Des études ont montré que lorsque l'aube fonctionne à haut régime, elle se déforme sous l'effet centrifuge et les efforts aérodynamiques. Le jeu radial J en tête d'aube diminue et il s'avère que dans certains cas, ce jeu J n'assure pas une marge suffisante pour éviter le contact entre la tête 27 d'aube et l'abradable. Ce frottement induit sur la tête 27 d'aube une charge tangentielle, schématisée par les flèches F de la figure 2, dirigée de l'intrados 24 vers l'extrados 25 de l'aube 2 et ce dans la direction opposée à la rotation de l'aube 2 autour de l'axe AX de rotation du moteur.

Cette contrainte implique une déformation supplémentaire de l'aube. Plusieurs cas peuvent alors survenir.

Selon un premier cas, si cette déformation induit une augmentation de jeu de sorte à diminuer les efforts et désengager la pale de l'abradable, l'aube est définie comme non auto-engageante. On estime alors que dans ce premier cas le comportement de l'aube est sain quand elle entre en contact avec l'abradable.

Au contraire, selon un deuxième cas, si une consommation de jeu positive est induite par la déformation, l'aube est définie comme auto-engageante. Dans ce deuxième cas, l'aube va continuer à s'enfoncer dans l'abradable et les efforts sur l'aube vont augmenter. L'aube et les parties environnantes de celle-ci peuvent alors subir de graves dommages.

La solution la plus simple pour éviter ce phénomène d'auto-engagement ou du moins réduire sa criticité est d'augmenter le jeu en tête d'aube afin d'avoir une marge supplémentaire avant le contact de l'aube avec l'abradable. Cette stratégie permet d'éviter tout endommagement du moteur mais peut avoir un impact non négligeable sur les performances aérodynamiques de l'aubage. Le fait d'augmenter le jeu en tête augmente le débit de fuite et les pertes associées dans cette zone.

De plus, on cherche à éviter des configurations du bord d'attaque de la tête d'aube qui en cas d'auto-engagement se détachent difficilement du fait de leur profil géométrique et augmentent la criticité de l'auto-engagement.

Un premier objectif de l'invention est d'obtenir une aube de soufflante rotative de turbomachine, permettant de limiter la criticité de l'auto-engagement sur le bord d'attaque de la tête d'aube sans détériorer les performances aérodynamiques.

Un deuxième objectif de l'invention est d'obtenir une aube de soufflante rotative de turbomachine, permettant d'éviter des configurations du bord d'attaque de la tête d'aube qui en cas d'auto-engagement se détachent difficilement du fait de leur profil géométrique et augmentent la criticité de l'auto-engagement.

A cet effet, un premier objet de l'invention est une aube de soufflante rotative de turbomachine, l'aube comportant :
un corps en un matériau composite, ayant un bord amont et un bord aval, entre lesquels le corps s'étend suivant une première direction longitudinale, un extrados et un intrados, entre lesquels le corps s'étend suivant une deuxième direction d'épaisseur, qui est transversale à la première direction, un pied d'aube et un bord de tête d'aube, entre lesquels le corps s'étend suivant une troisième direction de hauteur, transversale aux première et deuxième directions, le pied d'aube ayant pour fonction la fixation sur un moyeu rotatif longitudinal de soufflante,
une pièce de renforcement métallique comportant un nez amont métallique, qui forme un bord d'attaque de l'aube et qui est fixé au bord amont, une première ailette métallique, qui est raccordée en aval d'un premier flanc d'extrados du nez amont métallique et qui est fixée à une partie amont de l'extrados, et une deuxième ailette métallique, qui est raccordée en aval d'un deuxième flanc d'intrados du nez amont métallique et qui est fixée à une partie amont de l'intrados, le nez amont métallique ayant une partie métallique de tête d'aube, située en amont du bord de tête d'aube,
le nez amont métallique comprenant au moins sur la partie métallique de tête d'aube au moins un évidement, qui est d'épaisseur effilée longitudinalement et qui est débouchant suivant la troisième direction de hauteur sur la partie métallique de tête d'aube,
le au moins un évidement délimitant sur la partie métallique de tête d'aube sur une hauteur non nulle déterminée suivant la troisième direction de hauteur au moins une saillie métallique d'usure prescrite, qui est d'épaisseur effilée longitudinalement sur une majeure partie d'une longueur du nez amont métallique suivant la première direction longitudinale et qui est configurée pour se détacher au moins partiellement en présence d'un frottement tangentiel allant dans la deuxième direction d'épaisseur contre la partie métallique de tête d'aube,
le au moins un évidement et la au moins une saillie métallique d'usure prescrite prolongeant dans la première direction longitudinale vers l'amont la première ailette métallique et/ou la deuxième ailette métallique et/ou le bord amont du corps en matériau composite.

Grâce à l'invention, la saillie métallique d'usure prescrite prévue au niveau de la tête d'aube métallique peut suffire à éviter l'auto-engagement de l'ensemble de l'aube à partir de son bord d'attaque. L'usure de la saillie métallique d'usure prescrite de tête d'aube lors de sa rotation éventuelle contre le matériau abradable du carter de la soufflante peut être progressive pour conserver une hauteur suffisante de la tête d'aube diminuant le débit de fuite entre l'aube et ce carter, tout en évitant l'auto-engagement du deuxième cas mentionné ci-dessus. La saillie de rupture prescrite ou zone fusible sur une aube auto-engageante permet lors d'un contact de désengager l'aube limitant ainsi les endommagements à la tête d'aube. Ainsi, plutôt que de changer de nombreuses pièces lors d'un événement critique conduisant à un phénomène d'auto-engagement de l'aube, seule l'aube pourra être réparée ou remplacée. La détermination des jeux en tête d'aube ne tient plus compte du caractère auto-engageant d'une aube. Il est alors possible de réduire les jeux, ce qui améliore les performances aérodynamiques de l'aube. Ainsi, le dimensionnement d'une aube en fonction de la cible moteur (diamètre, vitesse de rotation, etc) déterminera la solution optimale pour réaliser la zone de rupture prescrite parmi les modes de réalisation proposés.

Suivant un mode de réalisation de l'invention, l'épaisseur effilée longitudinalement de la saillie métallique d'usure prescrite est constante au moins sur une partie de la hauteur non nulle déterminée.

Suivant un mode de réalisation de l'invention, l'épaisseur effilée longitudinalement de la saillie métallique d'usure prescrite est constante sur une majeure partie d'une longueur du nez amont métallique.

Suivant un mode de réalisation de l'invention, la partie métallique de tête d'aube a une épaisseur augmentant dans un sens allant de l'amont vers l'aval, le au moins un évidement est délimité par des arêtes du nez amont métallique, l'épaisseur occupée par le au moins un évidement par rapport aux arêtes augmentant dans le sens allant de l'amont vers l'aval sur une majeure partie d'une longueur du nez amont métallique.

Suivant un mode de réalisation de l'invention, la partie métallique de tête d'aube a une épaisseur augmentant dans un sens allant de l'amont vers l'aval, le au moins un évidement est délimité par des arêtes du nez amont métallique, ladite hauteur non nulle déterminée, occupée par le au moins un évidement par rapport aux arêtes, diminuant dans un sens allant de l'amont vers l'aval sur une majeure partie d'une longueur du nez amont métallique.

Suivant un mode de réalisation de l'invention, le au moins un évidement est formé par au moins un épaulement, qui est raccordé au premier flanc d'extrados du nez amont métallique. L'épaulement peut incorporer une courbe.

Suivant un mode de réalisation de l'invention, le au moins un évidement est formé par un épaulement, qui est raccordé au deuxième flanc d'intrados du nez amont métallique. L'épaulement peut incorporer une courbe.

Suivant un mode de réalisation de l'invention, le nez amont métallique comporte comme évidement au moins un premier évidement, qui est formé par un premier épaulement raccordé au premier flanc d'extrados du nez amont métallique, et au moins un deuxième évidement, qui est formé par un deuxième épaulement raccordé au deuxième flanc d'intrados du nez amont métallique. L'épaulement peut inclure une courbe.

Suivant un mode de réalisation de l'invention, l'épaulement est courbe.

Suivant un mode de réalisation de l'invention, la saillie métallique d'usure prescrite entoure le au moins un évidement.

Suivant un mode de réalisation de l'invention, le bord de tête d'aube comporte une autre saillie d'usure prescrite, qui est d'épaisseur effilée longitudinalement et qui prolonge la saillie métallique d'usure prescrite. Ainsi, si on considère que la saillie de la pièce de renforcement est une première saillie, l'autre saillie d'usure prescrite sur le bord de tête d'aube du corps de l'aube est une saillie additionnelle venant compléter la première saillie de la pièce de renforcement métallique dans son prolongement dans la première direction longitudinale.

Un deuxième objet de l'invention est une soufflante rotative de turbomachine, comportant un moyeu rotatif longitudinal de soufflante et une pluralité d'aubes telles que décrites ci-dessus, qui sont fixées au niveau de leur pied d'aube au moyeu rotatif longitudinal de soufflante.

Un troisième objet de l'invention est une turbomachine comportant une soufflante rotative telle que décrite ci-dessus, et, en aval de la soufflante, un compresseur basse pression, un compresseur haute pression, une chambre de combustion, une turbine haute pression et une turbine basse pression.

L'invention sera mieux comprise à la lecture de la description qui va suivre, donnée uniquement à titre d'exemple non limitatif en référence aux figures ci-dessous des dessins annexés.
[Fig. 1] représente une vue schématique de face d'une aube suivant l'état de la technique.
[Fig. 2] représente une vue schématique suivant une direction radiale de la tête d'une aube suivant l'état de la technique.
[Fig. 3] représente une vue schématique en coupe axiale d'une turbomachine, comportant l'aube suivant l'invention.
[Fig. 4] représente une vue schématique en perspective d'une aube suivant un mode de réalisation de l'invention.
[Fig. 5] représente une vue schématique agrandie en perspective de la tête de l'aube suivant un premier mode de réalisation de l'invention.
[Fig. 6] représente une vue schématique agrandie en coupe transversale de la tête de l'aube suivant le premier mode de réalisation de l'invention.
[Fig. 7] représente une vue schématique agrandie en perspective de la tête de l'aube suivant un deuxième mode de réalisation de l'invention.
[Fig. 8] représente une vue schématique agrandie en coupe transversale de la tête d'aube de la figure 7 suivant le deuxième mode de réalisation de l'invention.
[Fig. 9] représente une vue schématique agrandie de dessus de la tête d'aube de la figure 7 suivant un mode de réalisation de l'invention.
[Fig. 10] représente une vue schématique agrandie en perspective de la tête de l'aube de la figure 7 suivant une variante du deuxième mode de réalisation de l'invention dont la hauteur d'un évidement diminue de l'amont vers l'aval.
[Fig. 11] représente une vue schématique agrandie en perspective de la tête de l'aube suivant un troisième mode de réalisation de l'invention.
[Fig. 12] représente une vue schématique agrandie en perspective de la tête de l'aube suivant un quatrième mode de réalisation de l'invention.
[Fig. 13] représente une vue schématique agrandie en coupe transversale d'une partie de la tête de l'aube suivant un cinquième mode de réalisation de l'invention.
[Fig. 14] représente une vue schématique agrandie en coupe transversale d'une partie de la tête de l'aube suivant un sixième mode de réalisation de l'invention.
[Fig. 15] représente une vue schématique agrandie en coupe transversale d'une partie de la tête de l'aube suivant un septième mode de réalisation de l'invention.
[Fig. 16] représente une vue schématique agrandie en perspective de la partie de la tête de l'aube de la figure 15 suivant le septième mode de réalisation de l'invention.
[Fig. 17] représente une vue schématique agrandie en perspective d'une partie de la tête de l'aube suivant un huitième mode de réalisation de l'invention.

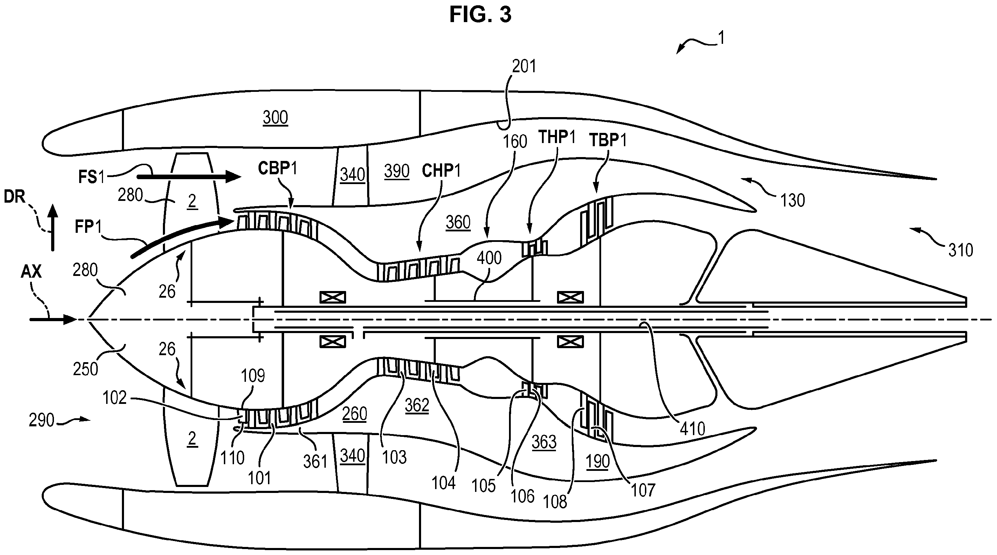

On décrit ci-dessous plus en détail en référence à la figure 3 un exemple de turbomachine 1 sur laquelle peut être utilisée la ou les aubes 2 de soufflante rotative suivant l'invention.

Ainsi que cela est connu, la turbomachine 1 représentée à la figure 3 est destinée à être installée sur un aéronef non représenté pour le propulser dans les airs.

L'ensemble moteur à turbine à gaz ou turbomachine 1 s'étend autour d'un axe AX ou direction axiale AX (ou première direction longitudinale AX mentionnée ci-dessous) orientée de l'amont vers l'aval. Par la suite, les termes « amont », respectivement « aval » ou « avant », respectivement « arrière », ou « gauche » respectivement « droite » ou « axialement » sont pris le long de la direction générale des gaz qui s'écoulent dans la turbomachine selon l'axe AX. La direction allant de l'intérieur vers l'extérieur est la direction radiale DR (ou troisième direction DR de hauteur mentionnée ci-dessous) partant de l'axe AX.

La turbomachine 1 est par exemple à double corps. La turbomachine 1 comprend un premier étage formé par une soufflante rotative 280 et un moteur à turbine à gaz central 130, situé en aval de la soufflante rotative 280. Central à la turbomachine, le générateur de gaz 130 comprend, de l'amont vers l'aval dans le sens d'écoulement des gaz, un compresseur basse pression CBP1, un compresseur haute pression CHP1, une chambre de combustion 160, une turbine haute pression THP1 et une turbine basse pression TBP1, qui délimitent un flux primaire de gaz FP1.

La soufflante rotative 280 comprend un ensemble d'aubes 2 rotatives de soufflante s'étendant radialement vers l'extérieur depuis un moyeu rotatif 250 de soufflante. Les aubes 2 rotatives de soufflante sont entourées extérieurement par un carter 300 de soufflante, comportant une ou plusieurs couches 301 d'un matériau abradable sur sa surface située en face des têtes 27 d'aube des aubes 2.

La turbomachine 1 présente une extrémité amont d'admission 290 située en amont de la soufflante 280, et une extrémité aval d'échappement 310. La turbomachine 1 comprend également un carter inter-veine 360 qui délimite une veine primaire dans laquelle circule le flux primaire FP1 qui traverse en aval de la soufflante 280 le compresseur basse pression CBP1, le compresseur haute pression CHP1, la turbine haute pression THP1 et la turbine basse pression TBP1.

Le carter inter-veine 360 comporte, de l'amont vers l'aval, un carter 361 du compresseur basse pression CBP1, un carter intermédiaire 260, qui est interposé entre le compresseur basse pression CBP1 et le compresseur haute pression CHP1, un carter 362 du compresseur haute pression CHP1, un carter 363 de la turbine haute pression THP1 et un carter 190 de la turbine basse pression TBP1.

Le compresseur basse pression CBP1 et le compresseur haute pression CHP1 peuvent comporter chacun un ou plusieurs étages, chaque étage étant formé par un ensemble d'aubes fixes (ou aubage de stator) et un ensemble d'aubes rotatives (ou aubage de rotor).

Les aubes fixes 101 du compresseur basse pression CBP1 sont fixées au carter 361. Les aubes rotatives 102 du compresseur basse pression CBP1 sont fixées à un premier arbre rotatif 410 de transmission.

Les aubes fixes 103 du compresseur haute pression CHP1 sont fixées au carter 362. Les aubes rotatives 104 du compresseur haute pression CHP1 sont fixées à un deuxième arbre rotatif 400 de transmission.

La turbine haute pression THP1 et la turbine basse pression TBP1 peuvent comporter chacun un ou plusieurs étages, chaque étage étant formé par un ensemble d'aubes fixes (ou aubage de stator) et un ensemble d'aubes rotatives (ou aubage de rotor).

Les aubes fixes 105 de la turbine haute pression THP1 sont fixées au carter 363. Les aubes rotatives 106 de la turbine haute pression THP1 sont fixées au deuxième arbre rotatif 400 de transmission.

Les aubes fixes 107 de la turbine basse pression TBP1 sont fixées au carter 190. Les aubes rotatives 108 de la turbine basse pression TBP1 sont fixées au premier arbre rotatif 410 de transmission.

Les aubes 108 rotatives de la turbine basse pression TBP1 entraînent les aubes rotatives 102 du compresseur basse pression CBP1 en rotation autour de l'axe AX sous l'effet de la poussée des gaz provenant de la chambre de combustion 160. Les aubes rotatives 106 de la turbine haute pression THP1 entraînent les aubes rotatives 104 du compresseur haute pression CHP1 en rotation autour de l'axe AX sous l'effet de la poussée des gaz provenant de la chambre de combustion 160.

Les aubes 2 de soufflante rotative sont en amont des aubes 101,102, 103, 104 105, 106, 107 et 108 et sont de forme différente de celles-ci.

En fonctionnement, l'air s'écoule à travers la soufflante rotative 280 et une première partie FP1 (flux primaire FP1) du flux d'air est acheminée à travers le compresseur basse pression CBP1 et le compresseur haute pression CHP1, dans lesquels le flux d'air est comprimé et envoyé à la chambre de combustion 160. Les produits de combustion chauds (non représentés sur les figures) provenant de la chambre de combustion 160 sont utilisés pour entraîner les turbines THP1 et TBP1 et produire ainsi la poussée de la turbomachine 1. La turbomachine 1 comprend également une veine secondaire 390 qui est utilisée pour faire passer un flux secondaire FS1 du flux d'air évacué de la soufflante rotative 280 autour du carter inter-veine 360. Plus précisément, la veine secondaire 390 s'étend entre une paroi interne 201 d'un carénage 200 ou nacelle 200 et le carter inter-veine 360 entourant le moteur à turbine à gaz central 130, le carter 300 de soufflante étant la partie amont de ce carénage 200 ou nacelle 200. Des bras 340 relient le carter intermédiaire 260 à la paroi interne 201 du carénage 200 dans la veine secondaire 390 du flux secondaire FS1.

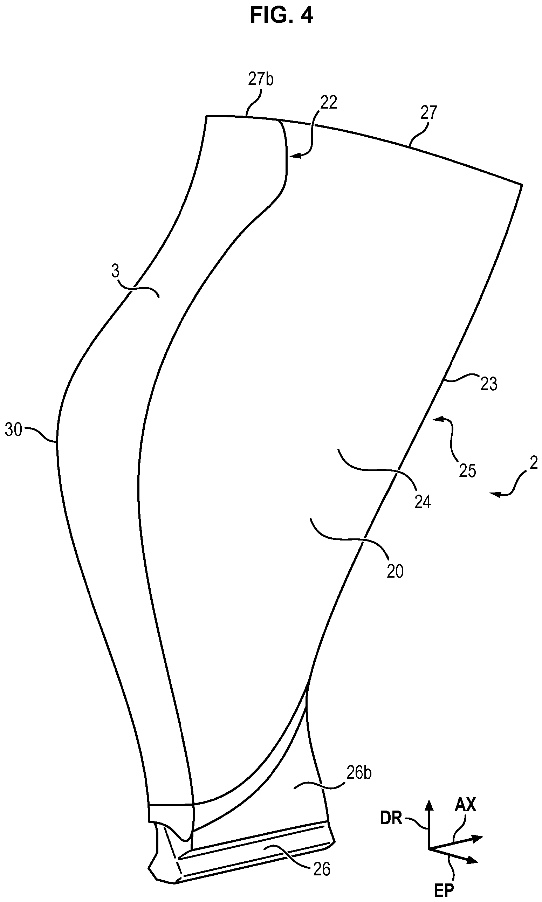

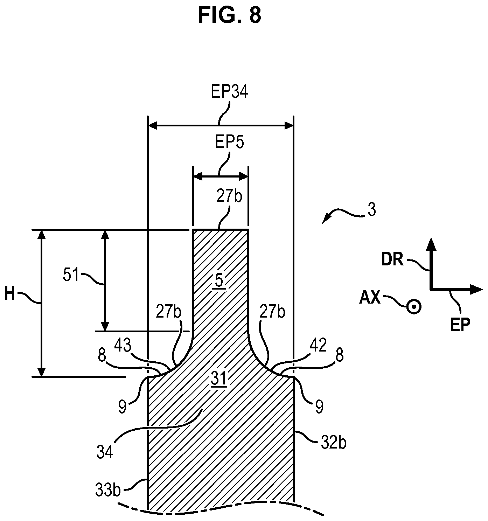

Ci-dessous, l'aube 2 de soufflante rotative de turbomachine suivant l'invention est décrite en référence aux figures 4 à 17.

A la figure 4, l'aube 2 comporte un corps 20 en un matériau composite, qui s'étend entre un bord amont 22 et un bord aval 23 éloigné du bord amont suivant la première direction longitudinale AX. Le corps 20 a une courbure tridimensionnelle dans plusieurs sections de plan prises perpendiculairement à la première direction longitudinale AX.

Le corps 20 en matériau composite s'étend entre un extrados 24 et un intrados 25, éloigné de l'extrados 25 suivant la deuxième direction EP d'épaisseur transversale à la première direction AX. L'extrados 24 est tourné vers l'extérieur dans le sens de rotation de l'aube 2 de soufflante lorsque le moyeu 250 de soufflante auquel est fixé le pied 26 d'aube tourne autour de la direction axiale AX. Le corps 20 a une courbure tridimensionnelle dans plusieurs sections de plan prises perpendiculairement à la deuxième direction EP d'épaisseur. L'extrados 24 est dissymétrique par rapport à l'intrados 25.

Le corps 20 en matériau composite s'étend entre un pied 26 d'aube et le bord supérieur 27 de tête d'aube du corps 20, éloigné du pied 26 d'aube suivant la troisième direction DR de hauteur, transversale aux première et deuxième directions AX et EP. La troisième direction DR de hauteur est orientée de bas en haut du pied 26 d'aube au bord supérieur 27 de tête d'aube et à la partie métallique 27b de tête d'aube décrite ci-dessous. Le pied 26 d'aube sert à être fixé au moyeu rotatif longitudinal 250 de soufflante. A cet effet, le pied 26 d'aube peut avoir une section transversale épaissie, pouvant être par exemple en forme de queue d'aronde ou autre, suivant la direction EP par rapport à une zone intermédiaire 26b située entre le pied 26 d'aube et le bord supérieur 27 de tête d'aube. Le pied d'aube 26 peut ainsi être inséré dans un logement périphérique du moyeu 250 de soufflante pour y être fixé.

On décrit ci-dessous un mode de réalisation du corps 20 en matériau composite. Le corps 20 de l'aube 2 est en un matériau composite tissé en trois dimensions dans une résine. Le corps 20 en matériau composite comprend une matrice de résine dans laquelle est noyé un renfort fibreux 4 comportant des torons de chaîne s'étendant au moins selon la troisième direction DR de hauteur et des torons de trame s'étendant au moins selon la première direction longitudinale AX à l'état fini de l'aube 2. Un procédé de fabrication possible du corps 20 de l'aube 2 est le suivant. Les torons de chaîne sont tissés en trois dimensions avec les torons de trame pour former le renfort fibreux lors d'une première étape de tissage. Puis, au cours d'une deuxième étape de moulage, le renfort fibreux est placé dans un moule, où le renfort fibreux est déformé selon une courbure tridimensionnelle imposée par une courbure tridimensionnelle prescrite des parois intérieures du moule, puis de la résine est injectée autour du renfort fibreux dans le moule, pour donner la forme tridimensionnelle du corps 20 de l'aube 2 à l'état fini. Après moulage de la résine autour du renfort fibreux, les torons de chaîne et les torons de trame présentent la courbure tridimensionnelle du corps 20 à l'état fini. Le renfort fibreux 4 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube peut être formée par moulage au moyen d'un procédé d'injection sous vide de résine du type RTM (pour moulage à transfert de résine, en anglais : « Resin Transfer Moulding), ou encore VARRTM (pour moulage à transfert de résine sous vide, en anglais : Vacuum Resin Transfer Molding). Par tissage tridimensionnel, on comprendra que les torons de chaîne suivent des trajets sinueux afin de lier entre eux des torons de trame appartenant à des couches de torons de trame différentes exception faite de déliaisons, étant noté qu'un tissage tridimensionnel, notamment à armure interlock, peut inclure des tissages bidimensionnels en surface. Différentes armures de tissage tridimensionnel peuvent être utilisées, telles que des armures interlock, multi-satin ou multi-voile.

En amont du bord amont 22 est fixé, par exemple par collage au moyen d'une couche 7 d'adhésif, une pièce 3 de renforcement métallique (également appelé bouclier) formant un bord d'attaque 30 de l'aube 2 (figure 4). La pièce 3 de renforcement a pour fonction de faire face au flux aérodynamique entrant en vol pour répondre au problème d'érosion de l'aube et de protection de l'aube contre l'ingestion d'oiseaux.

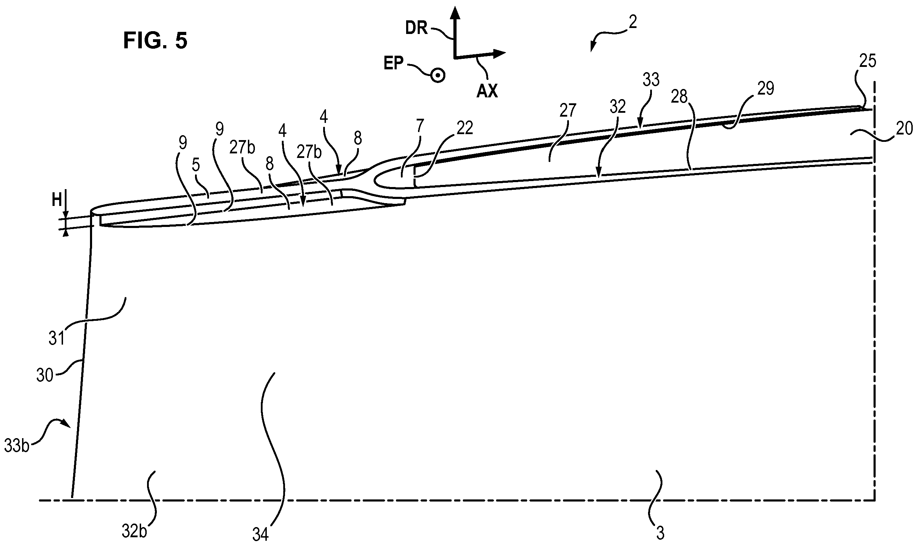

On décrit ci-dessous une partie métallique 27b de tête d'aube de la pièce 3 de renforcement métallique en référence aux figures 5 à 17.

La pièce 3 de renforcement métallique comporte un nez amont métallique 31, qui forme le bord 30 d'attaque de l'aube 2 et qui est fixé au bord amont 22. Le nez amont métallique 31 est formé d'un premier flanc 32b d'extrados et d'un deuxième flanc 33b d'intrados, qui se raccordent l'un à l'autre dans le sens de la direction EP d'épaisseur et qui se terminent en amont au niveau du bord 30 d'attaque. La pièce 3 de renforcement métallique comporte une première ailette 32, qui est raccordée en aval du premier flanc 32b d'extrados et qui est fixée par la couche 7 d'adhésif à une partie amont 28 de l'extrados 24 du corps 2. La pièce 3 de renforcement métallique comporte une deuxième ailette 33, qui est raccordée en aval du deuxième flanc 33b d'intrados et qui est collée par la couche 7 d'adhésif à une partie amont 29 de l'intrados 25 du corps 2. Le nez amont métallique 31, la première ailette 32 et la deuxième ailette 33 délimitent une cavité dans laquelle se trouvent le bord amont 22 et les parties amont 28, 29 de l'extrados 24 et de l'intrados 25. Le nez amont métallique 31 est plein et est plus épais que chaque ailette 32 et 33 dans la zone principale 34 de la pièce 3. Le corps 20, le nez amont métallique 31, la première ailette 32 et la deuxième ailette 33 ont une courbure tridimensionnelle dans des premières sections prises dans plusieurs plans distincts perpendiculaires à la première direction AX, dans des deuxièmes sections prises dans plusieurs plans distincts perpendiculaires à la deuxième direction EP et dans des troisièmes sections prises dans plusieurs plans distincts perpendiculaires à la troisième directions DR. La pièce 3 se termine suivant la troisième direction DE de hauteur au-dessus de sa zone principale 34 par une partie métallique 27b de tête d'aube, située en amont du premier bord 27 de tête d'aube du corps 2 en matériau composite.

En référence aux figures 5 à 17, le nez amont métallique 31 comprend sur la partie métallique 27b de tête d'aube une ou plusieurs saillie(s) métallique(s) 5 d'usure prescrite. Chaque saillie métallique 5 d'usure prescrite a une épaisseur effilée EP5 selon la première direction longitudinale AX et une hauteur non nulle déterminée H suivant la troisième direction DR de hauteur. La ou les saillie(s) métallique(s) 5 d'usure prescrite est délimitée par un ou plusieurs évidements 4, qui est/sont d'épaisseur effilée selon la première direction longitudinale AX et qui sont ménagés au moins sur la partie métallique 27b de tête d'aube du nez amont métallique 31. La ou les saillie(s) métallique(s) 5 d'usure prescrite est configurée pour se détacher au moins partiellement en présence d'un frottement tangentiel allant dans la deuxième direction EP d'épaisseur contre la partie métallique 27b de tête d'aube. Le ou les évidement(s) 4 et la ou les saillie(s) métallique(s) 5 d'usure prescrite prolongent en amont la première ailette métallique 32 et/ou la deuxième ailette métallique 33 et/ou le bord amont 22 du corps 21 en matériau composite. La saillie 5 agit ainsi en tant que fusible en cas de contact trop prononcé avec l'abradable 301 situé sur le carter 300 de la soufflante 280. La saillie 5 de rupture prescrite est présente dans une partie auto-engageante de l'aube 2, c'est-à-dire une partie pouvant venir en contact avec le matériau abradable 301 du carter 300 de la soufflante 280, telle que définie ci-dessus. Ainsi, en cas d'effort important sur la partie métallique 27b de tête d'aube, dû à un contact avec l'abradable 301, la saillie 5 se détachera partiellement de l'aube, ce qui permet de sortir directement du contact avec l'abradable 301 et évitera l'auto-engagement. Les dimensions de la saillie 5 peuvent être déterminées en fonction des dimensions des parties de l'aube les plus proches de l'abradable 301. La saillie 5 forme un désépaississement de la partie métallique 27b de tête d'aube.

En référence aux figures 5 à 17, le ou les évidements 4 a la hauteur non nulle déterminée H au-dessus de la partie principale 34 et est délimité vers le bas par une surface 8 de transition raccordant la saillie 5 à la partie principale 34 d'épaisseur EP34 supérieure à l'épaisseur EP5 de la saillie 5. La surface 8 de transition est tournée vers le haut dans la troisième direction DR de hauteur et peut présenter par exemple une rupture 9 de pente ou arête 9 la raccordant à la partie principale 34 et/ou à la saillie 5.

Suivant des modes de réalisation de l'invention selon les figures 5 à 12, l'épaisseur EP5 effilée longitudinalement de la saillie métallique 5 d'usure prescrite est constante au moins sur une partie de la hauteur déterminée H en partant du haut. Ainsi, cette partie de la hauteur de la saillie métallique 5 d'usure prescrite n'offre-t-elle pas une résistance croissante lors d'un frottement contre le matériau abradable 301 du carter de soufflante 300 en cas de début d'auto-engagement lors de la rotation de l'aube 2 et s'use plus facilement, ce qui réduit les risques d'auto-engagement et permet d'atteindre le deuxième objectif indiqué ci-dessus.

Dans le mode de réalisation de l'invention représentés aux figures 5, 6 et 9, l'épaisseur EP5 effilée longitudinalement de la saillie métallique 5 d'usure prescrite est constante sur toute la hauteur déterminée H. La surface 8 de transition peut être plane et par exemple perpendiculaire à la saillie 5.

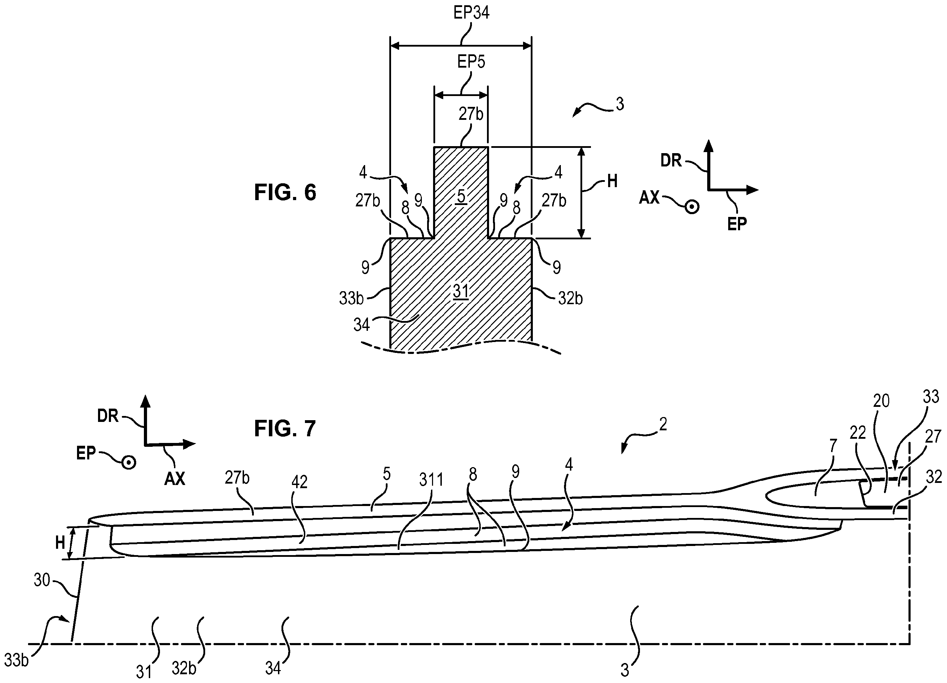

Dans le mode de réalisation de l'invention représenté aux figures 7 à 10, l'épaisseur EP5 effilée longitudinalement de la saillie métallique 5 d'usure prescrite est constante sur une partie supérieure 51 de la hauteur H.

La surface 8 de transition peut être courbe (par exemple concave) dans plusieurs sections de plan, qui sont prises perpendiculairement à la première direction longitudinale AX comme aux figures 7 à 10. La surface 8 de transition peut former un congé 42 et/ou 43 ou un épaulement 42 et/ou 43 tourné vers le haut.

Aux figures 4 à 10, il peut être ainsi prévu un premier évidement 4 formé par un premier épaulement courbe 42 raccordé au premier flanc 32b d'extrados du nez amont métallique 31 et/ou un deuxième évidement 4 formé par un deuxième épaulement courbe 43 raccordé au deuxième flanc 33b d'intrados du nez amont métallique 31.

Dans d'autres modes de réalisation non représentés, la saillie 5 peut se trouver du côté du premier flanc 32b d'extrados du nez amont métallique 31, l'évidement 4 étant dans ce cas du côté du deuxième flanc 33b d'intrados du nez amont métallique 31. Dans d'autres modes de réalisation non représentés, la saillie 5 peut se trouver du côté du deuxième flanc 33b d'intrados du nez amont métallique 31, l'évidement 4 étant dans ce cas du côté du premier flanc 32b d'extrados du nez amont métallique 31.

Dans le mode de réalisation de l'invention représenté aux figures 5 à 17, l'épaisseur EP5 effilée longitudinalement de la saillie métallique 5 d'usure prescrite est constante sur une majeure partie 311 d'une longueur du nez amont métallique 31 selon la direction longitudinale AX. Par exemple, la majeure partie 311 de la longueur du nez amont métallique 31 selon la direction longitudinale AX représente au moins 50 % de la longueur du nez amont métallique 31 selon la direction longitudinale AX. La longueur du nez amont métallique 31 selon la direction longitudinale AX est prise entre le bord 30 d'attaque et le bord amont 22, ou entre le bord 30 d'attaque et la première ailette métallique 32, ou entre le bord 30 d'attaque et la deuxième ailette métallique 33.

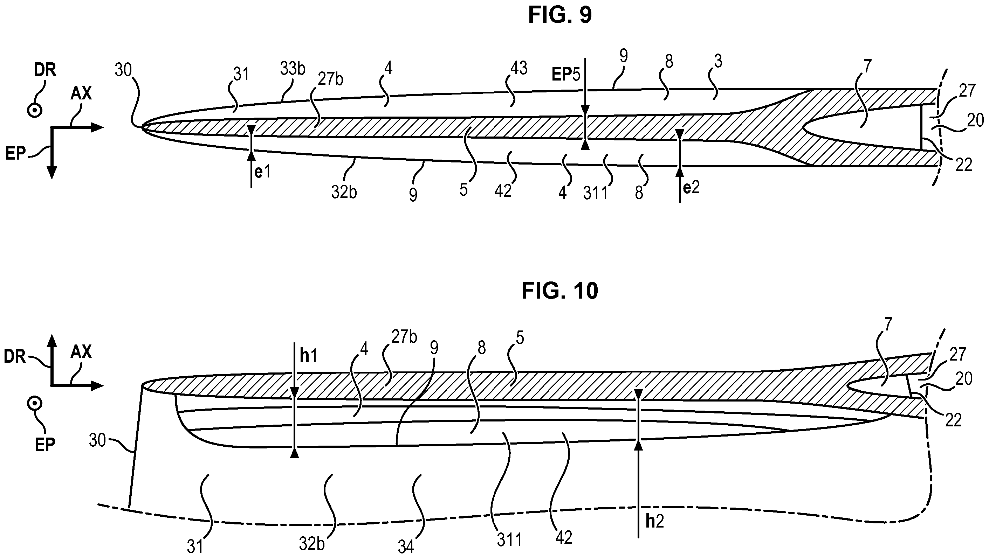

Dans le mode de réalisation de l'invention représenté à la figure 9, la partie métallique 27b de tête d'aube et/ou la saillie métallique 5 d'usure prescrite a l'épaisseur EP5 augmentant dans le sens allant de l'amont vers l'aval suivant la direction longitudinale AX. Le ou les évidement 4 est délimité par les arêtes 9 du nez amont métallique 31. L'épaisseur e1, e2 occupée par le au moins un évidement 4 par rapport aux arêtes 9 augmente dans le sens allant de l'amont vers l'aval suivant la direction longitudinale AX sur une majeure partie 311 de la longueur du nez amont métallique 31. On a ainsi e1 < e2 avec l'épaisseur e1 prise plus en amont que l'épaisseur e2. La majeure partie 311 peut avoir la définition mentionnée ci-dessus.

Dans les modes de réalisation de l'invention représenté aux figures 1 à 17, le premier bord 27 de tête d'aube du corps 2 en matériau composite peut avoir une autre épaisseur augmentant dans le sens allant de l'amont vers l'aval suivant la direction longitudinale AX sur une partie amont, par exemple sur au moins20 % ou au moins 50 % en partant du bord amont 22, de la longueur de ce premier bord 27 de tête d'aube, prise suivant la direction longitudinale AX. La longueur de ce premier bord 27 de tête d'aube peut être prise suivant la direction longitudinale AX entre le bord amont 22 et le bord aval 23 du corps 20 en matériau composite.

Dans le mode de réalisation de l'invention représenté aux figures 7, 9 et 10, la hauteur non nulle déterminée H, h1, h2 occupée par le ou les évidement 4 et par la saillie 5 par rapport aux arêtes 9 diminue dans le sens allant de l'amont vers l'aval suivant la direction longitudinale AX sur une majeure partie 311 de la longueur du nez amont métallique 31. On a ainsi h1 > h2 avec la hauteur h1 prise plus en amont que la hauteur h2. La majeure partie 311 peut avoir la définition mentionnée ci-dessus.

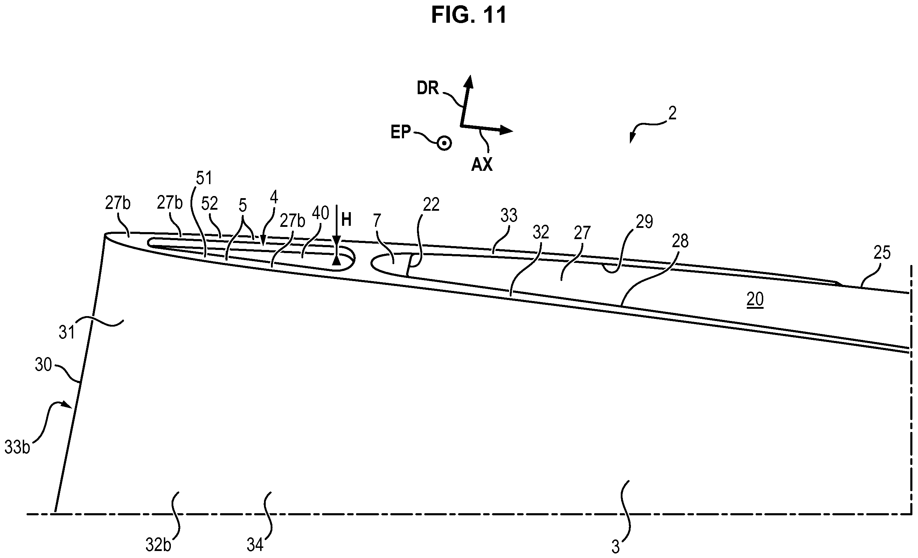

Dans le mode de réalisation de l'invention représenté à la figure 11, la saillie métallique 5 d'usure prescrite entoure le ou les évidements 4. La saillie 5 comporte deux première et deuxièmes parties longitudinalement effilées 51 et 52, lesquelles prolongent dans la direction DR de la hauteur respectivement le premier flanc 32b d'extrados du nez amont métallique 31 et le deuxième flanc 33b d'intrados du nez amont métallique 31. L'évidement 4 est délimité entre les parties longitudinalement effilées 51 et 52 et au-dessus d'un fond 40 situé entre ces parties longitudinalement effilées 51 et 52. Cela permet de conserver le profil aérodynamique de l'aube, les surfaces externes étant inchangées. L'évidement 4 peut être un creusement, pouvant être réalisé par usinage.

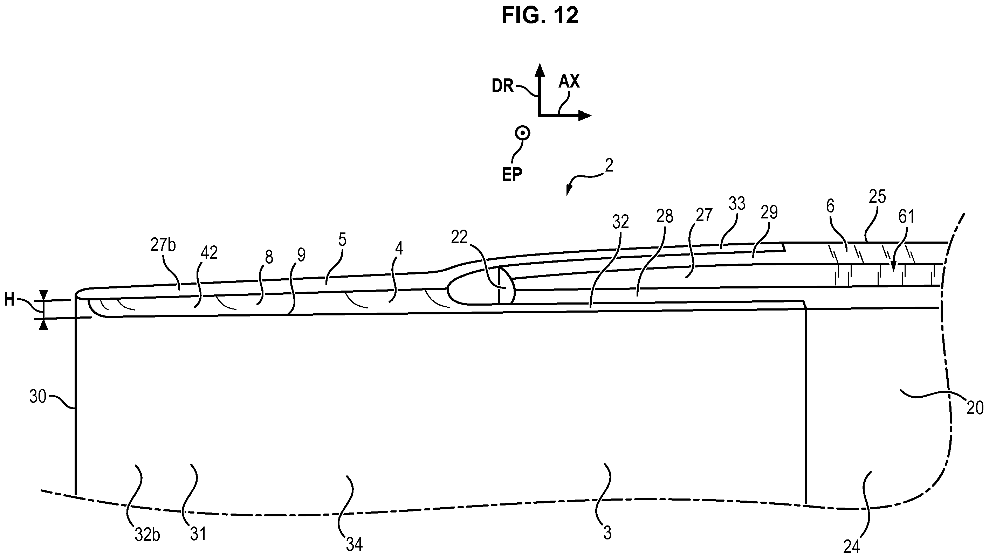

Dans le mode de réalisation de l'invention représenté aux figures 12 à 17, le bord 27 de tête d'aube comporte une autre saillie 6 d'usure prescrite (ou deuxième saillie 6 d'usure prescrite), qui est d'épaisseur effilée suivant la direction longitudinale AX et qui prolonge en aval la saillie métallique 5 d'usure prescrite (ou première saillie métallique 5 d'usure prescrite) suivant la direction longitudinale AX. L'autre saillie 6 d'usure prescrite est donc en le matériau composite du corps 20 de l'aube 2. L'autre saillie 6 forme un désépaississement du bord 27 de tête d'aube. L'autre saillie 6 agit ainsi en tant que fusible en cas de contact trop prononcé avec l'abradable 301 situé sur le carter 300 de la soufflante 280. L'autre saillie 6 de rupture prescrite est présente dans une partie auto-engageante de l'aube 2, c'est-à-dire une partie pouvant venir en contact avec le matériau abradable 301 du carter 300 de la soufflante 280, telle que définie ci-dessus. Ainsi, en cas d'effort important sur le bord 27 de tête d'aube, dû à un contact avec l'abradable 301, l'autre saillie 6 se détachera partiellement de l'aube, ce qui permet de sortir directement du contact avec l'abradable 301 et évitera l'auto-engagement. Les dimensions de l'autre saillie 6 peuvent être déterminées en fonction des dimensions des parties de l'aube les plus proches de l'abradable 301.

L'autre saillie 6 d'usure prescrite peut être bordée par un chanfrein 61 s'étendant suivant la direction longitudinale AX et raccordé à l'intrados 25 (ou à l'extrados 24 dans d'autres modes de réalisation non représentés), ainsi qu'illustré aux figures 12, 13 et 14 à 17. Le chanfrein 61 peut être plan.

L'autre 6 peut se terminer vers le haut par une surface plane 62, qui est effilée suivant la direction longitudinale AX et qui a une épaisseur EP62 non nulle ainsi que représenté aux figures 12 et 15 à 17.

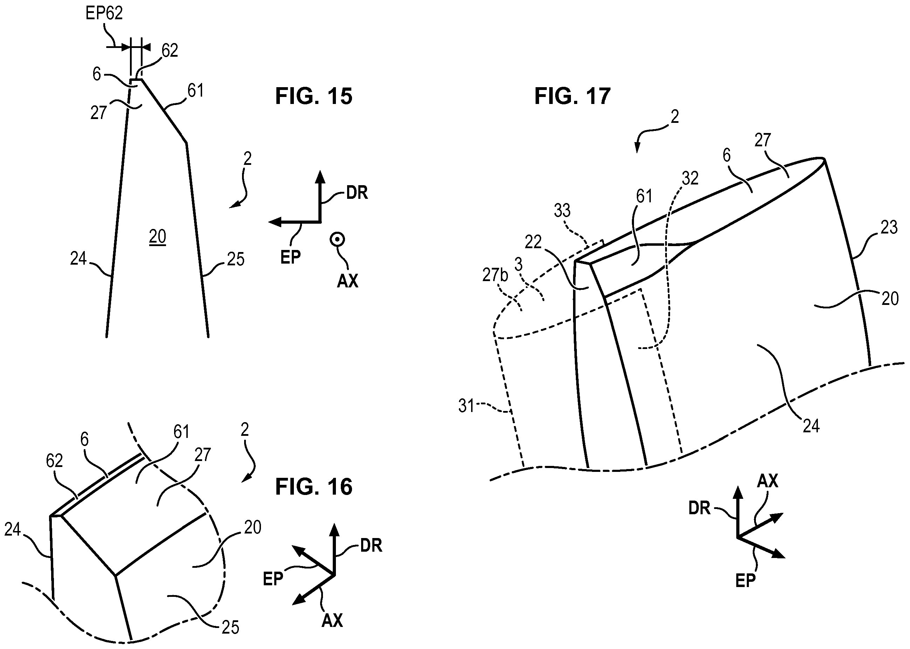

Le chanfrein 61 peut s'étendre sur une partie de la longueur du bord 27 de tête d'aube en partant de son bord amont 22, ainsi que représenté à la figure 17 (où la couche 7 d'adhésif n'a pas été représentée), pour former un chanfrein local 61.

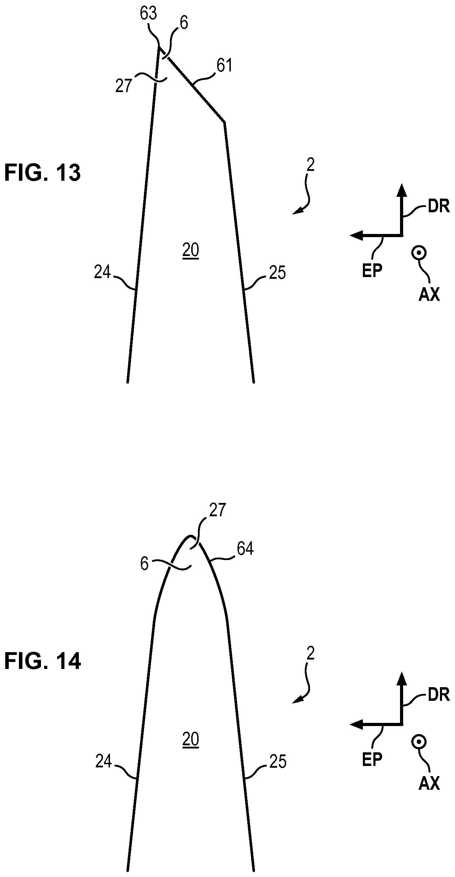

L'autre 6 peut se terminer vers le haut par une arête 63, qui s'étend suivant la direction longitudinale AX et qui a une épaisseur nulle ainsi que représenté à la figure 13.

L'autre 6 peut se terminer vers le haut par un bord arrondi 64, qui s'étend suivant la direction longitudinale AX et qui est raccordé à l'intrados 25 et à l'extrados 24, ainsi que représenté à la figure 14. Le bord arrondi 64 a dans plusieurs plans distincts transversaux à la direction AX un rayon de courbure inférieur à celui de l'intrados 25 et de l'extrados 24.

Bien entendu, les modes de réalisation, caractéristiques, possibilités et exemples décrits ci-dessus peuvent être combinés l'un avec l'autre ou être sélectionnés indépendamment l'un de l'autre.

## Revendications

1. Aube (2) de soufflante rotative de turbomachine, l'aube (2) comportant :
un corps (20) en un matériau composite, ayant un bord amont (22) et un bord aval (23), entre lesquels le corps (20) s'étend suivant une première direction longitudinale (AX), un extrados (24) et un intrados (25), entre lesquels le corps (20) s'étend suivant une deuxième direction (EP) d'épaisseur, qui est transversale à la première direction (AX), un pied (26) d'aube et un bord (27) de tête d'aube, entre lesquels le corps (20) s'étend suivant une troisième direction (DR) de hauteur, transversale aux première et deuxième directions (AX, EP), le pied (26) d'aube ayant pour fonction la fixation sur un moyeu rotatif longitudinal (250) de soufflante,
une pièce (3) de renforcement métallique comportant un nez amont métallique (31), qui forme un bord (30) d'attaque de l'aube et qui est fixé au bord amont (22), une première ailette métallique (32), qui est raccordée en aval d'un premier flanc (32b) d'extrados du nez amont métallique (31) et qui est fixée à une partie amont (28) de l'extrados (24), et une deuxième ailette métallique (33), qui est raccordée en aval d'un deuxième flanc (33b) d'intrados du nez amont métallique (31) et qui est fixée à une partie amont (29) de l'intrados (25), le nez amont métallique (31) ayant une partie métallique (27b) de tête d'aube, située en amont du bord (27) de tête d'aube,
le nez amont métallique (31) comprenant au moins sur la partie métallique (27b) de tête d'aube au moins un évidement (4), qui est d'épaisseur effilée longitudinalement (AX) et qui est débouchant suivant la troisième direction (DR) de hauteur sur la partie métallique (27b) de tête d'aube,
l'aube étant **caractérisée en ce que**
le au moins un évidement (4) délimite sur la partie métallique (27b) de tête d'aube sur une hauteur non nulle déterminée (H) suivant la troisième direction (DR) de hauteur au moins une saillie métallique (5) d'usure prescrite, qui est d'épaisseur (EP5) effilée longitudinalement (AX) sur une majeure partie (311) d'une longueur du nez amont métallique (31) suivant la première direction longitudinale (AX) et qui est configurée pour se détacher au moins partiellement en présence d'un frottement tangentiel allant dans la deuxième direction (EP) d'épaisseur contre la partie métallique (27b) de tête d'aube,
le au moins un évidement (4) et la au moins une saillie métallique (5) d'usure prescrite prolongeant dans la première direction longitudinale (AX) vers l'amont la première ailette métallique (32) et/ou la deuxième ailette métallique (33) et/ou le bord amont (22) du corps (20) en matériau composite.

2. Aube suivant la revendication 1, **caractérisée en ce que** l'épaisseur (EP5) effilée longitudinalement (AX) de la saillie métallique (5) d'usure prescrite est constante au moins sur une partie (51, H) de la hauteur non nulle déterminée (H).

3. Aube suivant la revendication 1, **caractérisée en ce que** l'épaisseur (EP5) effilée longitudinalement (AX) de la saillie métallique (5) d'usure prescrite est constante sur la majeure partie (311) de la longueur du nez amont métallique (31).

4. Aube suivant l'une quelconque des revendications précédentes, **caractérisée en ce que** la partie métallique (27b) de tête d'aube a une épaisseur (EP5) augmentant dans un sens allant de l'amont vers l'aval, le au moins un évidement (4) est délimité par des arêtes (9) du nez amont métallique (31), l'épaisseur (e1, e2) occupée par le au moins un évidement (4) par rapport aux arêtes (9) augmentant dans le sens allant de l'amont vers l'aval sur la majeure partie (311) de la longueur du nez amont métallique (31).

5. Aube suivant l'une quelconque des revendications précédentes, **caractérisée en ce que** la partie métallique (27b) de tête d'aube a une épaisseur augmentant dans un sens allant de l'amont vers l'aval, le au moins un évidement (4) est délimité par des arêtes (9) du nez amont métallique (31), ladite hauteur non nulle déterminée (H, h1, h2), occupée par le au moins un évidement (4) par rapport aux arêtes (9), diminuant dans un sens allant de l'amont vers l'aval sur la majeure partie (311) de la longueur du nez amont métallique (31).

6. Aube suivant l'une quelconque des revendications précédentes, **caractérisée en ce que** le au moins un évidement (4) est formé par au moins un épaulement (42), qui est raccordé au premier flanc (32b) d'extrados du nez amont métallique (31).

7. Aube suivant l'une quelconque des revendications précédentes, **caractérisée en ce que** le au moins un évidement (4) est formé par un épaulement (43), qui est raccordé au deuxième flanc (33b) d'intrados du nez amont métallique (31).

8. Aube suivant l'une quelconque des revendications 1 à 5, **caractérisée en ce que** le nez amont métallique (31) comporte comme évidement (4) au moins un premier évidement (42), qui est formé par un premier épaulement (42) raccordé au premier flanc (32b) d'extrados du nez amont métallique (31), et au moins un deuxième évidement (43), qui est formé par un deuxième épaulement raccordé au deuxième flanc (33b) d'intrados du nez amont métallique (31).

9. Aube suivant l'une quelconque des revendications 6 à 8, **caractérisée en ce que** l'épaulement (42, 43) est courbe.

10. Aube suivant l'une quelconque des revendications 1 à 5, **caractérisée en ce que** la saillie métallique (5) d'usure prescrite entoure le au moins un évidement (4).

11. Aube suivant l'une quelconque des revendications 1 à 5, **caractérisée en ce que** le bord (27) de tête d'aube comporte une autre saillie (6) d'usure prescrite, qui est d'épaisseur effilée longitudinalement (AX) et qui prolonge la saillie métallique (5) d'usure prescrite.

12. Soufflante (280) rotative de turbomachine, comportant un moyeu rotatif longitudinal (250) de soufflante et une pluralité d'aubes (2) suivant l'une quelconque des revendications précédentes, qui sont fixées au niveau de leur pied (26) d'aube au moyeu rotatif longitudinal (250) de soufflante.

13. Turbomachine (1) comportant une soufflante rotative (280) suivant la revendication 12, et, en aval de la soufflante (280), un compresseur basse pression (CBP1), un compresseur haute pression (CHP1), une chambre (160) de combustion, une turbine haute pression (THP1) et une turbine basse pression (TBP1).

## Patentansprüche

1. Rotationsgebläse-Laufschaufel (2) einer Turbomaschine, wobei die Laufschaufel (2) umfasst:
einen Körper (20) aus einem Verbundmaterial, der eine stromaufwärtige Kante (22) und eine stromabwärtige Kante (23), zwischen denen sich der Körper (20) entlang einer ersten Längsrichtung (AX) erstreckt, eine Saugseite (24) und eine Druckseite (25), zwischen denen sich der Körper (20) entlang einer zweiten Dickenrichtung (EP), die zu der ersten Richtung (AX) quer liegt, erstreckt, einen Laufschaufelfuß (26) und eine Laufschaufelkopfkante (27), zwischen denen sich der Körper (20) entlang einer dritten Höhenrichtung (DR), die zu der ersten und der zweiten Richtung (AX, EP) quer liegt, erstreckt, aufweist, wobei der Laufschaufelfuß (26) die Funktion der Befestigung an einer Längsdrehnabe (250) des Gebläses erfüllt,
ein metallisches Verstärkungsstück (3), das eine metallische stromaufwärtige Nase (31), die eine Vorderkante (30) der Laufschaufel bildet und die an der stromaufwärtigen Kante (22) befestigt ist, eine erste metallische Rippe (32), die stromabwärts einer ersten Saugseitenflanke (32b) der metallischen stromaufwärtigen Nase (31) verbunden ist und die an einem stromaufwärtigen Teil (28) der Saugseite (24) befestigt ist, und eine zweite metallische Rippe (33), die stromabwärts einer zweiten Druckseitenflanke (33b) der metallischen stromaufwärtigen Nase (31) verbunden ist und die an einem stromaufwärtigen Teil (29) der Druckseite (25) befestigt ist, umfasst, wobei die metallische stromaufwärtige Nase (31) einen metallischen Laufschaufelkopfteil (27b) aufweist, der sich stromaufwärts der Laufschaufelkopfkante (27) befindet,
wobei die metallische stromaufwärtige Nase (31) mindestens auf dem metallischen Laufschaufelkopfteil (27b) mindestens eine Aussparung (4) umfasst, deren Dicke sich längsseitig (AX) verjüngt und die entlang der dritten Höhenrichtung (DR) auf den metallischen Laufschaufelkopfteil (27b) mündet,
wobei die Laufschaufel **dadurch gekennzeichnet ist, dass**
die mindestens eine Aussparung (4) auf dem metallischen Laufschaufelkopfteil (27b) über eine bestimmte Höhe (H) ungleich null entlang der dritten Höhenrichtung (DR) mindestens einen vorgeschriebenen metallischen Verschleißvorsprung (5) begrenzt, der eine sich längsseitig (AX) verjüngende Dicke (EP5) auf einem Großteil (311) einer Länge der metallischen stromaufwärtigen Nase (31) entlang der ersten Längsrichtung (AX) aufweist, und der dazu konfiguriert ist, sich bei Vorliegen einer tangentialen Reibung, die in der zweiten Dickenrichtung (EP) gegen den metallischen Laufschaufelkopfteil (27b) geht, mindestens teilweise zu lösen,
wobei die mindestens eine Aussparung (4) und der mindestens eine vorgeschriebene metallische Verschleißvorsprung (5) in der ersten Längsrichtung (AX) nach stromaufwärts die erste metallische Rippe (32) und/oder die zweite metallische Rippe (33) und/oder die stromaufwärtige Kante (22) des Körpers (20) aus Verbundmaterial verlängern.

2. Laufschaufel nach Anspruch 1, **dadurch gekennzeichnet, dass** die sich längsseitig (AX) verjüngende Dicke (EP5) des vorgeschriebenen metallischen Verschleißvorsprungs (5) mindestens auf einem Teil (51, H) der bestimmten Höhe (H) ungleich null konstant ist.

3. Laufschaufel nach Anspruch 1, **dadurch gekennzeichnet, dass** die sich längsseitig (AX) verjüngende Dicke (EP5) des vorgeschriebenen metallischen Verschleißvorsprungs (5) auf dem Großteil (311) der Länge der metallischen stromaufwärtigen Nase (31) konstant ist.

4. Laufschaufel nach einem beliebigen der vorhergehenden Ansprüche, **dadurch gekennzeichnet, dass** der metallische Laufschaufelkopfteil (27b) eine Dicke (EP5) aufweist, die in einer Richtung von stromaufwärts nach stromabwärts zunimmt, die mindestens eine Aussparung (4) durch Stege (9) der metallischen stromaufwärtigen Nase (31) begrenzt ist, wobei die Dicke (e1, e2), die von der mindestens einen Aussparung (4) im Verhältnis zu den Stegen (9) eingenommen wird, in der Richtung von stromaufwärts nach stromabwärts auf dem Großteil (311) der Länge der metallischen stromaufwärtigen Nase (31) zunimmt.

5. Laufschaufel nach einem beliebigen der vorhergehenden Ansprüche, **dadurch gekennzeichnet, dass** der metallische Laufschaufelkopfteil (27b) eine Dicke aufweist, die in einer Richtung von stromaufwärts nach stromabwärts zunimmt, die mindestens eine Aussparung (4) durch Stege (9) der metallischen stromaufwärtigen Nase (31) begrenzt ist, wobei die bestimmte Höhe (H, h1, h2) ungleich null, die von der mindestens einen Aussparung (4) im Verhältnis zu den Stegen (9) eingenommen wird, in einer Richtung von stromaufwärts nach stromabwärts auf dem Großteil (311) der Länge der metallischen stromaufwärtigen Nase (31) abnimmt.

6. Laufschaufel nach einem beliebigen der vorhergehenden Ansprüche, **dadurch gekennzeichnet, dass** die mindestens eine Aussparung (4) durch mindestens eine Schulter (42) gebildet wird, die mit der ersten Saugseitenflanke (32b) der metallischen stromaufwärtigen Nase (31) verbunden ist.

7. Laufschaufel nach einem beliebigen der vorhergehenden Ansprüche, **dadurch gekennzeichnet, dass** die mindestens eine Aussparung (4) durch eine Schulter (43) gebildet wird, die mit der zweiten Druckseitenflanke (33b) der metallischen stromaufwärtigen Nase (31) verbunden ist.

8. Laufschaufel nach einem beliebigen der Ansprüche 1 bis 5, **dadurch gekennzeichnet, dass** die metallische stromaufwärtige Nase (31) als Aussparung (4) mindestens eine erste Aussparung (42), die von einer ersten Schulter (42) gebildet wird, die mit der ersten Saugseitenflanke (32b) der metallischen stromaufwärtigen Nase (31) verbunden ist, und mindestens eine zweite Aussparung (43), die durch eine zweite Schulter gebildet wird, die mit der zweiten Druckseitenflanke (33b) der metallischen stromaufwärtigen Nase (31) verbunden ist, umfasst.

9. Laufschaufel nach einem beliebigen der Ansprüche 6 bis 8, **dadurch gekennzeichnet, dass** die Schulter (42, 43) gekrümmt ist.

10. Laufschaufel nach einem beliebigen der Ansprüche 1 bis 5, **dadurch gekennzeichnet, dass** der vorgeschriebene metallische Verschleißvorsprung (5) die mindestens eine Aussparung (4) umgibt.

11. Laufschaufel nach einem beliebigen der Ansprüche 1 bis 5, **dadurch gekennzeichnet, dass** die Laufschaufelkopfkante (27)einen anderen vorgeschriebenen Verschleißvorsprung (6) umfasst, der eine sich längsseitig (AX) verjüngende Dicke aufweist und der den vorgeschriebenen metallischen Verschleißvorsprung (5) verlängert.

12. Rotationsgebläse (280) einer Turbomaschine, umfassend eine Längsdrehnabe (250) und eine Vielzahl von Laufschaufeln (2) nach einem beliebigen der vorhergehenden Ansprüche, die an ihrem Laufschaufelfuß (26) an der Längsdrehnabe (250) befestigt sind.

13. Turbomaschine (1), umfassend ein Rotationsgebläse (280) nach Anspruch 12, und stromabwärts des Gebläses (280) einen Niederdruck-Verdichter (CBP1), einen Hochdruck-Verdichter (CHP1), eine Brennkammer (160), eine Hochdruckturbine (THP1) und eine Niederdruckturbine (TBP1).

## Claims

1. A rotary turbomachine fan blade (2), the blade (2) comprising:
a body (20) made of a composite material, having an upstream edge (22) and a downstream edge (23), between which the body (20) extends along a first longitudinal direction (AX), an extrados (24) and an intrados (25), between which the body (20) extends along a second thickness direction (EP), which is transverse to the first direction (AX), a blade root (26) and a blade head edge (27), between which the body (20) extends along a third height direction (DR), transverse to the first and second directions (AX, EP), the blade root (26) having the function of attachment on a longitudinal rotary fan hub (250),
a metallic reinforcement part (3) comprising an upstream metallic nose (31), which forms a leading edge (30) of the blade and which is fixed to the upstream edge (22), a first metallic fin (32), which is connected downstream of a first extrados flank (32b) of the upstream metallic nose (31) and which is fixed to an upstream portion (28) of the extrados (24), and a second metallic fin (33), which is connected downstream of a second intrados flank (33b) of the upstream metallic nose (31) and which is fixed to an upstream portion (29) of the intrados (25), the upstream metallic nose (31) having a metallic blade head portion (27b), located upstream of the blade head edge (27),
the upstream metallic nose (31) comprising at least on the metallic blade head portion (27b) at least one recess (4), which is of longitudinally tapered thickness (AX) and which is opening out along the third height direction (DR) on the metallic blade head portion (27b),
the blade being **characterized in that** the at least one recess (4) delimits on the metallic blade head portion (27b) over a determined non-zero height (H) along the third height direction (DR) at least one metallic prescribed wear protrusion (5), which is of longitudinally tapered (AX) thickness (EP5) over a major portion (311) of a length of the upstream metallic nose (31) along the first longitudinal direction (AX) and which is configured to be detached at least partially in the presence of tangential friction in the second thickness direction (EP) against the metallic blade head portion (27b),
the at least one recess (4) and the at least one metallic prescribed wear protrusion (5) extending, in the first longitudinal direction (AX) upstream, the first metallic fin (32) and/or the second metallic fin (33) and/or the upstream edge (22) of the body (20) made of a composite material.

2. The blade according to claim 1, **characterized in that** the longitudinally tapered (AX) thickness (EP5) of the metallic prescribed wear protrusion (5) is constant at least over a portion (51, H) of the determined non-zero height (H).

3. The blade according to claim 1, **characterized in that** the longitudinally tapered (AX) thickness (EP5) of the metallic prescribed wear protrusion (5) is constant over a major portion (311) of the length of the upstream metallic nose (31).

4. The blade according to any one of the preceding claims, **characterized in that** the metallic blade head portion (27b) has a thickness (EP5) increasing from upstream to downstream, the at least one recess (4) is delimited by ridges (9) of the upstream metallic nose (31), wherein the thickness (e1, e2) occupied by the at least one recess (4) relative to the ridges (9) increases from upstream to downstream over the major portion (311) of the length of the upstream metallic nose (31).

5. The blade according to any one of the preceding claims, **characterized in that** the metallic blade head portion (27b) has a thickness increasing from upstream to downstream, the at least one recess (4) is delimited by ridges (9) of the upstream metallic nose (31), wherein said determined non-zero height (H, h1, h2) occupied by the at least one recess (4) relative to the ridges (9) decreases from upstream to downstream over a major portion (311) of the length of the upstream metallic nose (31).

6. The blade according to any one of the preceding claims, **characterized in that** the at least one recess (4) is formed by at least one shoulder (42), which is connected to the first extrados flank (32b) of the upstream metallic nose (31).

7. The blade according to any one of the preceding claims, **characterized in that** the at least one recess (4) is formed by a shoulder (43), which is connected to the second intrados flank (33b) of the upstream metallic nose (31).

8. The blade according to any one of claims 1 to **5, characterized in that** the upstream metallic nose (31) comprises as a recess (4) at least a first recess (42), which is formed by a first shoulder (42) connected to the first extrados flank (32b) of the upstream metallic nose (31), and at least a second recess (43), which is formed by a second shoulder connected to the second intrados flank (33b) of the upstream metallic nose (31).

9. The blade according to any one of claims 6 to 8, **characterized in that** the shoulder (42, 43) is curved.

10. The blade according to any one of claims 1 to 5, **characterized in that** the metallic prescribed wear protrusion (5) surrounds the at least one recess (4).

11. The blade according to any one of claims 1 to 5, **characterized in that** the blade head edge (27) comprises another metallic prescribed wear protrusion (6), which is of longitudinally tapered thickness (AX) and which extends the at least one metallic prescribed wear protrusion.

12. A rotary turbomachine fan (280), comprising a longitudinal rotary fan hub (250) and a plurality of blades (2) according to any one of the preceding claims, which are fixed by their blade root (26) to the longitudinal rotary fan hub (250).

13. A turbomachine (1) comprising a rotary fan (280) according to claim 12, and, downstream of the fan (280), a low-pressure compressor (CBP1), a high-pressure compressor (CHP1), a combustion chamber (160), a high-pressure turbine (THP1) and a low-pressure turbine (TBP1).
